Europäisches Patentamt

European Patent Office

Office européen des brevets

(11) Publication number: **0 190 353**
**B1**

(12) **EUROPEAN PATENT SPECIFICATION**

(45) Date of publication of patent specification: **02.08.89**

(21) Application number: **85902661.9**

(22) Date of filing: **03.06.85**

(86) International application number:
**PCT/JP85/00307**

(87) International publication number:
**WO 86/00882 13.02.86 Gazette 86/04**

(51) Int. Cl.⁴: **C 04 B 24/26, C 04 B 28/02,
C 04 B 28/14, C 08 L 33/06,
C 08 F 20/10, C 08 F 220/10,
C 08 F 228/02**

(54) EMULSION FOR MODIFYING INORGANIC MOLDING AND PROCESS FOR ITS PRODUCTION.

(30) Priority: **24.07.84 JP 154930/84**

(43) Date of publication of application:
**13.08.86 Bulletin 86/33**

(45) Publication of the grant of the patent:
**02.08.89 Bulletin 89/31**

(84) Designated Contracting States:
**FR**

(56) References cited:
**JP-A-53 128 549
JP-A-54 043 285
JP-A-58 206 603
JP-A-58 217 506
JP-B-41 009 424
JP-B-52 039 053**

(73) Proprietor: **JAPAN EXLAN COMPANY, LTD.
2-8, Dojimahama-2-chome Kita-ku
Osaka-shi Osaka 530 (JP)**

(72) Inventor: **SHINKAWA, Akihiro
335-35, Yamasaki Okayama-shi
Okayama 703 (JP)**

(74) Representative: **Cabinet Pierre HERRBURGER
115, Boulevard Haussmann
F-75008 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical field

This invention relates to an emulsion for modifying inorganic moldings and a method of producing the same. More particularly, it relates to an aqueous emulsion of a polymer having a specific monomer composition, a specific glass transition temperature and a specific particle size, said emulsion having a pH within a specific range and being capable of significantly improving the performance characteristics of inorganic moldings.

Background art

Inorganic materials, in particular cement concrete, mortar and gypsum, are used widely as materials of construction. However, they generally have several drawbacks of an intrinsic nature, such as low tensile strength and surface hardness, susceptibility to cracking, insufficient water resistance and adhesiveness, leachability of alkalis, and poor resistance to chemicals, and attempts have been made for many years to overcome these drawbacks. One of such attempts consists in making composite materials by combining an inorganic material with an organic polymer, and, at present, said organic polymer is used mainly in the form of an aqueous emulsion for reasons of processability, economy, environmental safety and so forth.

However, when such aqueous emulsion is mixed with an inorganic material or applied to an inorganic molding, the emulsion is broken due to insufficiency in chemical or mechanical stability against multivalent metal ions, such as $Ca^{++}$ and $Al^{+++}$, leached out from the inorganic material or against shearing force during kneading and this intrinsically leads to aggregation or coagulation of polymer particles. To avoid such problems a nonionic low-molecular-weight emulsifier is usually added in large amounts to the aqueous emulsion. Here arises, however, a new problem: when produced by a process involving addition or application thereto of an aqueous emulsion containing a large amount of emulsifier, the inorganic molding has much reduced water resistance and adhesiveness. Another new problem is foaming in the steps of mixing and application, for instance.

It is also known that when high flowability is required, as in the case of self-smoothening gypsum floorings, a flowability agent such as sodium ligninsulfonate should preferably be admixed with the inorganic material. However, since sodium ligninsulfonate is water-soluble, the inorganic molding finally obtained cannot have improved water resistance. Moreover, although such means can provide the emulsion with flowability, the penetration of the emulsion into the inorganic material remains insufficient.

On the other hand, there is known a technique of preparing emulsifier-free aqueous emulsions using, as a polymerizable emulsifier, an ethylenically unsaturated compound containing, for example, a sulfo group either in the free form or in the salt form and/or a carboxy group either in the free form or in the salt form or using, as an emulsifier substitute, a sulfo (in the free or salt form) and/or carboxy (in the free or salt form) and/or hydroxy group-containing, water-soluble polymer.

Under these circumstances, the present inventor directed his attention to the characteristics of the above-mentioned emulsifier-free aqueous emulsions and investigated the possibility of utilizing said emulsions as modifiers for inorganic moldings. As a result, the problems of foaming and insufficient water resistance have indeed been solved by the use of such emulsifier-free aqueous emulsions. However, when the polymer dispersed in water has a large particle size, fully satisfactory results cannot be obtained yet: the problems still to be solved are that the wettability and penetrability of inorganic materials are still poor, the processability is also poor due to poor miscibility of the emulsions with said materials or insufficient film-forming property thereof and, further, the inorganic moldings finally obtained have insufficient mechanical strength or that the emulsions are required to be used in large amounts for improving the performance characteristics, such as strength, water resistance and resistance to chemicals, of inorganic moldings or have still unsatisfactory chemical and mechanical stability.

Furthermore, it is not rare that the hardening time of inorganic materials or the percent setting expansion is modified by the addition of emulsions or the like. Therefore, when high precision moldings and good processability are required, it is necessary to take measures to correct the change in expansion coefficient or add an agent for modifying the hardening time and percent setting expansion.

In addition, from the viewpoints of strength, surface roughness, surface hardness and so forth of final inorganic moldings, the amount of water which is to be used in the step of molding should preferably be as small as possible. From the viewpoints of processability, formability and the like, however, there is an optimal level of addition of water. Accordingly, means are eagerly desired for reducing the necessary (or optimum) amount of water without impairing processability and so forth.

Disclosure of invention

It is an object of the invention to provide an emulsion with which various requirements can be met simultaneously, said requirements being (1) that no emulsion breaking occurs and no floculation or aggregation of polymer particles takes place in the step of producing inorganic moldings, (2) that the emulsion is well compatible with inorganic materials and above good penetrability upon application, (3) that the hardening time of inorganic materials is not affected significantly, (4) that the emulsion does not cause any large change in percent setting expansion of inorganic materials, (5) that the necessary amount of water can be reduced without substantial impairment of processability and formability or moldability and (6) that the emulsion can significantly improve the strength, surface roughness and hardness, water resistance, resistance to leaching of alkaline substances, resistance to chemicals, and wear resistance, among others.

The emulsion with which the objects of the invention can be achieved is an emulsion of a polymer dispersed in water in the form of particles substantially smaller in size than 1 μm, said polymer being composed of a (meth)acrylic acid ester, an ethylenically unsaturated sulfonic acid or a salt thereof and at least one other ethylenically unsaturated compound and having a Tg within the range of −10 to 60°C, capable of causing a viscosity reduction to be defined later herein of not less than 25%, and said emulsion having a pH of not less than 4.0 and being substantially free of any low molecular weight emulsifier. Such emulsion can be produced in an industrially advantageous manner by subjecting a mixture of the above-mentioned monomers to polymerization in the presence of water in an amount of 30 to 90 percent by weight based on the total of the monomer mixture and water under conditions such that the stirring impeller tip speed amounts to not less than 90 cm/second to thereby cause formation of an aqueous dispersion of a polymer having a Tg within the range of −10 to 60°C and a particle size substantially smaller than 1 μm, followed, as necessary, by adjusting the pH to not less than 4.0.

Thus, the most characteristic and advantageous features of the invention are that the emulsion according to the invention is excellent in chemical and mechanical stability against multivalent metal ions (such $Ca^{++}$ and $Al^{+++}$) leached out from inorganic molding materials or shearing force during kneading, that inorganic materials can be mixed or impregnated with the emulsion without aggregation or agglutination of polymer particles in the emulsion, that the emulsion will not modify the percent setting expansion of inorganic materials and that inorganic moldings improved in performance characteristics such as strength, water resistance and resistance to chemicals can finally be produced with high precision without adding any low molecular weight emulsifier.

Another advantageous feature of the invention is that the viscosity or the necessary amount of water to be added can be reduced substantially by using the emulsion in small amounts without adding a flowability agent such as sodium lingninsulfonate, hence inorganic moldings excellent in strength and water resistance can be obtained.

It is also an effect of the invention that even when the emulsion according to the invention is admixed with a hydraulic inorganic material, the polymer is united with said material without much affecting the hardening time of said material and moreover high flowability is obtained in the step of kneading, so that self-smoothening gypsum floorings can be provided.

Best mode for carrying out the invention

The invention is described in further detail. The (meth)acrylic acid ester, which is one of the essential component comonomers, includes acrylic acid esters such as methyl acrylate, ethyl acrylate, butyl acrylate, 2-ethylhexyl acrylate, octyl acrylate, methoxyethyl acrylate, phenyl acrylate and cyclohexyl acrylate, and methacrylic acid esters such as methyl methacrylate, ethyl methacrylate, butyl methacrylate, octyl methacrylate, methoxyethyl methacrylate, phenyl methacrylate, cyclohexyl methacrylate and 2-hydroxyethyl methacrylate. For producing polymers having a glass transition temperature (Tg) which is within said specific range, the use, as the (meth)acrylic acid ester, or methyl acrylate, ethyl acrylate, butyl acrylate, 2-ethylhexyl acrylate, methyl methacrylate, ethyl methacrylate, butyl methacrylate or the like is desirable although the desirable species of the (meth)acrylic acid ester also depend on the kind of said other ethylenically unsaturated compound, the monomer composition and other factors, hence can hardly be defined absolutely.

Said ethylenically unsaturated sulfonic acid or salt thereof includes, among others, hydrocarbonsulfonic acids, such as vinylsulfonic acid, allylsulfonic acid and methallylsulfonic acid, and salts thereof; aromatic hydrocarbon-sulfonic acids, such as p-styrenesulfonic acid, isopropenyl-benzenesulfonic acid, 2-chlorostyrenesulfonic acid and vinyloxybenzensulfonic acid, and salts thereof; sulfoalkyl esters of acrylic acid and of methacrylic acid, such as sulfoethyl methacrylate and sulfopropyl methacrylate, and salts thereof; and 2-acrylamido-2-methylpropanesulfonic acid and salts thereof. In particular, the use of the above-mentioned aromatic hydrocarbon sulfonic acids and salts thereof (e.g. alkali metal salts, ammonium salts) is desirable since when they are used, the objects of the invention can be achieved much more efficiently particularly with respect to stability of emulsion, polymer particle size and reduction of necessary amount of water.

The above-mentioned ethylenically unsaturated sulfonic acid is desirably used in an amount of 0.2 to 10 percent by weight, preferably 0.5 to 5 percent by weight. When said sulfonic acid is used in an amount below such preferred range, the objects of the invention cannot be fully achieved. The use in an amount exceeding the upper limit of said range is also undesirable since the final product may have reduced water resistance or the polymer may become water-soluble.

Said other ethylenically unsaturated compound includes, among others, vinyl halides and vinylidene halides, such as vinyl chloride, vinyl bromide, vinyl fluoride and vinylidene chloride; unsaturated ketones such as methyl vinyl ketone and methyl isopropenyl ketone; vinyl esters such as vinyl formate, vinyl acetate, vinyl propionate, vinyl butyrate and vinyl benzoate; vinyl ethers such as methyl vinyl ether and ethyl vinyl ether; unsubstituted and alkyl- and/or halo-substituted styrenes, such as styrene, α-methylstyrene and chlorostyrene; conjugated diene monomers such as butadiene and isoprene;

ethylenically unsaturated carboxylic acids such as acrylic acid, methacrylic acid, crotonic acid, maleic acid, fumaric acid, itaconic acid, aconitic acid, citraconic acid and mesaconic acid, and salts thereof; and acrylonitrile.

For achieving the objects of the invention, the use, as the other ethylenically unsaturated compound, of an ethylenically unsaturated carboxylic acids and a salt thereof such as mentioned above is desirable. The use of a vinyl halide or vinylidene halide, preferably vinylidene chloride, can produce further improvements in inorganic moldings with respect to flame or fire resistance, surface hardness, compression strength, tensile strength, water resistance and so forth. Furthermore, a reactive or crosslinking monomer such as acrylamide, N-methylolacrylamide, glycidyl methacrylate or ethylene glycol monomethacrylate, when used additionally, can further improve the chemical and mechanical properties of films formed from the emulsion obtained, hence the use of such monomer is desirable.

The glass transition temperature (Tg) of the polymer produced by using the above monomers combinedly should be controlled so that it can come within the range of −10 to 60°C, preferably 0 to 50°C. When the Tg is below the lower limit of said range, emulsion films formed within and united with inorganic moldings after admixture of the emulsion with an inorganic material are insufficient in strength, hardness and so on, so that the final product moldings cannot have markedly improved physical properties and, when the emulsion is applied for impregnation in the manner of coating, not only the physical property-improving effects is unsatisfactory but also the surface of moldings becomes sticky and disadvantageously causes adhesion of moldings with each other or adhesion of contaminants on moldings. On the other hand, when the Tg exceeds the upper limit of said range, uniform emulsion films having sufficient strength cannot be formed within the moldings since the heat of reaction generated by the reaction of water and the inorganic material is not enough for the formation of films from the emulsion. In this case, it may by chance be possible to improve physical properties of moldings by heat treatment after making up the moldings. In any case, however, great improvements in hardness, strength and so on can be effected only when the emulsion forms films in the process of curing of the inorganic material and thereby the polymer is united with the inorganic material.

The Tg referred to herein is defined by the following equation:

$$\frac{1}{Tg} = \sum_{i+1}^{n} \frac{Wi}{Tgi}$$

where

Tg is the glass transition temperature (°K) of a polymer composed of n monomers,

Tgi is the glass transition temperature (°K) of a homopolymer of monomer i, and

wi is the weight fraction of monomer i based on the total weight of monomers.

Next, the method of polymerization is explained. As already mentioned herein, the use of a known polymerization method offers problems, such as the stability problem which consists in formation of large amounts of aggregate during emulsion polymerization or standing after polymerization, or the problem of formation of coase polymer particles. To overcome such problems, it is usual to add a small amount of a low molecular weight emulsifier. In that case, too, problems are encountered, for example emulsion breaking in the step of mixing with the inorganic material, aggregate formation, change in hardening time or percent setting expansion, foaming, and decrease in water resistance. To attain the variegated objects of the invention simultaneously, it is necessary to carry out the polymerization of the monomer mixture in the presence of water in an amount of 30 to 90 percent by weight, preferably 40 to 80 percent by weight, based on the total weight of the monomer mixture and water under conditions such that the stirring impeller tip speed amounts to not less than 90 cm/second, preferably not less than 125 cm/second, and further perform the pH adjustment which is described later. The polymerization is preferably carried out while charging the polymerization vessesl with the monomers and catalyst either portionwise or continuously. If the above stirring conditions are not met, emulsions having satisfactory properties cannot be produced. The above stirring conditions are particularly important when a weakly hydrophilic (meth)acrylic acid ester, not a highly hydrophobic monomer such as styrene or a highly hydrophilic monomer such as acrylamide, is used as an essential comonomer, as in the case of the present invention. The stirrer impeller may be in the propeller, paddle, turbine or helical form, for instance.

As regards the polymerization catalyst, an appropriate one may be selected from among known polymerization catalysts. The use, however, of a redox catalyst system under conditions such that the chemical equivalent ratio of the reducing agent to the oxidizing agent is not more than 3.5 is preferred particularly in producing stable, fine-particle emulsions. When said chemical equivalent ratio exceeds 3.5, there unfavorably arise problems, such as odor originating from unreacted reducing agent remaining after polymerization, reduction in water resistance of films formed from emulsions, and adverse effects on hardening time of inorganic materials or percent setting expansion thereof. Preferred as the oxidizing agent is a persulfuric acid salt such as potassium persulfate or ammonium persulfate and, as the reducing agent, there is preferred a reducing sulfoxy compound such as a sulfite, a bisulfite, a metasulfite, a hydrosulfite or a thiosulfate. The use of a radox catalyst gives good results particularly when a low boiling point vinyl or vinylidene halide such as vinyl or vinylidene chloride is used as one of the comonomers. In producing stable fine-particle emulsions for which the percent viscosity reduction to be defined later herein is great, the additional use of an ethylenically unsaturated carboxylic acid or a salt thereof is also effective and the use of such comonomer in combination with a redox catalyst is still more effective.

When the emulsion obtained has a pH of less than 4, it is necessary to adjust the pH to not less than 4.0, preferably not less than 5.0 and the use of the so pH-adjusted emulsion can for the first time enable production of high-precision moldings industrially advantageous with good processing characteristics in a manner without causing any substantial change in hardening time or percent setting expansion of inorganic materials (especially gypsum). As the pH-adjusting agent, there may suitably be used alkali metal hydroxides, alkaline earth metal hydroxides and ammonia. Among them, sodium hydroxide, potassium hydroxide, calcium hydroxide and ammonia are preferred.

The emulsion according to the present invention contains polymer particles having an average particle size of substantially not greater than 1 μm, preferably not greater than 0,5 μm, stably dispersed in water but does not contain any low molecular weight emulsifier. When such polymer particle size exceeds 1 μm, the ability to wet and penetrate inorganic materials and the film-forming property are undesirably and disadvantageously reduced. As for the viscosity of the emulsion, an emulsion having a solid concentration of 40%, for instance, should preferably have a viscosity of not more than 0,1 Pa.s (100 cps) and such emulsion can give good results from the viewpoints of compatibility with and penetration into inorganic materials.

The emulsion according to the invention is further required to have a characteristic such that the percent viscosity reduction to be defined below is not less than 25%, preferably not less than 40%. Only when the emulsion has such characteristic, the interaction between inorganic material and the emulsion can be reduced, hence it becomes possible to prevent viscosity decrease and reduce the necessary amount of water without impairing processability, moldability or the like and without inhibiting the crystal growth in the process of hardening. As a result, the moldings finally obtained can have markedly improved strength, surface roughness and surface hardness, for instance.

In a cylindrical vessel having an inside diameter of 70 mm and a height of 150 mm, there is placed 190 g of water at 25°C, followed by distributing 500 g of gypsum for ceramic manufacture (Mutsumi Kagaku Kogyo's POROMIC A-100) uniformly onto the water surface over 1 minute, so that a water-to-gypsum ratio of 38:100 is attained. After 1 minute of standing, the mixture is stirred for 2 minutes using a rod having a diameter of 15 mm at a rate of 100 times per minute. The viscosity of the resulting gypsum slurry is measured in terms of the time (To seconds) required for the gypsum slurry to discharge through the orfice of an Iwata Tosoki Kogyo model NK-2 viscosity measuring cup and is expressed in terms of said discharge time.

Separately, the same procedure as above is followed except that the test emulsion is added so as to give a polymer-to-gypsum ratio in the final emulsion of 2:100, with the ratio of water (inclusive of water in the test emulsion) to gypsum being 38:100. In this manner, the discharge time (T seconds) for the resulting gypsum slurry is measured. The viscosity reduction is defined and calculated by the following equation:

$$\text{Percent viscosity reduction (\%)} = \frac{T_o - T}{T_o} \times 100$$

The reason why the aqueous emulsion according to the invention mentioned above can have excellent performance characteristics as a modifier for inorganic materials has not yet been clarified to a satisfactory extent but may be supposed to be as follows:

Thus, when a low molecular weight emulsifier is present in an aqueous emulsion, the emulsifier migrates onto or exudes from the surface of polymer films formed after application of the emulsion as a result of escape of water and impairs the adhesion between the inorganic molding material and the polymer films. When the final products in that state are immersed in water, the emulsifier can easily be leached out into water and, as a result, unfavorable effects are produced on water resistance and other physical properties. On the contrary, the emulsion according to the invention, which is free of such low molecular weight emulsifier, is supposedly superior in adhesiveness with inorganic materials to such an extent as to produce marked improvements in physical properties (e.g. strength) of final product. It is also conceivable that the sulfonic acid or salt thereof which is one of the essential comonomer components and is present on the surface of polymer particles contained in the aqueous emulsion according to the present invention is less susceptible to salt formation with multivalent metal ions such as $Ca^{++}$ and $Al^{+++}$ or atoms and/or molecules constituting inorganic materials as compared with carboxylic acids or salts thereof or such functional groups as hydroxyl. As a result, the polymer has good compatibility with inorganic materials. When the inorganic material is a hydraulic one, the polymer can be united with such material without exerting substantial influences on the hardening time. Furthermore, the polymer particles can supposedly penetrate into inorganic moldings to a sufficient depth to produce reinforcing effects, without aggregation or agglutination thereof on the inorganic molding surface.

It is further supposed that fine polymer article-containing aqueous emulsions such as those according to the present invention, by cooperation of the above specific functional group, get much improved ability to wet and penetrate inorganic materials and to become mixed with inorganic materials upon kneading and also get good film-forming ability and, as a result, marked improvements can be produced in final products with respect to strength, surface hardness, water resistance, prevention of leaching out of alkaline substances, resistance to chemicals, wear resistance and so forth.

In addition, it is considered that the emulsion according to the invention which is capable of causing viscosity reduction can reduce the viscosity or the amount of water to be added in the step of molding without impairing processability and so on, since its interaction with inorganic materials is small and that said emulsion does not inhibit the crystal growth in inorganic materials in the course of hardening but polymer films formed from the emulsion can be united with the moldings, so that the emulsion can contribute to the mitigation of drawbacks such as the reduction of strength, water resistance and surface roughness due to cavity formation and inhibition of crystal growth caused by evaporation of water, and also contribute to the improvements of physical properties of the moldings.

Since, in performing polymerization without using any usual low-molecular-weight emulsifier in accordance with the invention, it is required to first cause *in situ* formation of a high molecular weight emulsifier, which is necessary for effecting emulsion polymerization, in the polymerization system by the reaction of the ethylenically unsaturated sulfonic acid or salt thereof with the remaining monomers that are fed at high rate to the aqeuous reaction system, it is further presumable that the stirring conditions according to the invention under which liquid monomer droplets are exposed to great shearing force play a important role.

The following examples illustrate the invention in further detail. It is to be noted, however, that they are by no means limitative of the present invention. In the examples, "part(s)" and "percent (%)" are given on the weight bases unless otherwise specified. The measurements for dry compression strength, weight loss upon washing and percent setting expansion were carried out by the methods respectively given below.

(1) Dry compression strength (kg/cm$^2$)

A metal-made cylindrical mold having an inside diameter of 20 mm and a height of 30 mm is filled with the gypsum slurry sample that has reached the time for initiating casting, the surface is rendered flat, the test specimen is taken out from the mold after the lapse of about 60 minutes, allowed to stand in atmospheric environments for 24 hours and then tested for compression strength.

(2) Weight loss upon washing (%)

The samples prepared by hardening following blending or surface coating are allowed to stand at room temperature for 1 week, then are allowed to stand in running water (flow rate: 800 ml/min.) for 5 days. Then the samples are measured for the weight loss percentage thereof. A smaller value means better water resistance.

(3) Percent setting expansion (%)

According to JIS T 6604-1955, a metal mold for measurement is placed on a glass plate and filled with the kneaded sample (prepared by throwing 100 g of the sample into an amount of water corresponding to the necessary amount of water over 30 seconds, allowing the mixture to stand for 30 seconds and, directly thereafter, kneading the same at 100 revolutions per minute for 2 min.), the surface is made flat and, 6 minutes after initiation of throwing the sample into water, the dial gauge zero point is adjusted to attain horizontality. After 8 hours, the setting expansion is determined.

Example 1

A cylindrical polymerization vessel having an inside diameter of 13 cm and a height of 18 cm and provided with a stirrer (impeller: propeller type; impeller diameter; 6 cm) was charged with 924 parts of deionized water, and the polymerization was initiated at a temperature of 80°C under stirring conditions such that the tip speed amounted to 188 cm/seconds, while feeding dropwise a solution of 24 parts of sodium p-styrenesulfonate (NASS) in 176 parts of deionized water, a monomer mixture composed of 288 parts of methyl methacrylate (MMA), 40 parts of styrene (ST), 432 parts of ethyl acrylate (EtA) and 16 parts of methacrylic acid (MAA), and a solution of 4 parts of ammonium persulfate (APS) in 96 parts of deionized water, separately through respective feeding inlets. The rates of dropping were adjusted so that the addition of the monomers and catalyst was complete in 3 hours. After completion of addition, the polymerization was continued for further 1 hour. The thus-obtained emulsion (1) had a pH of 2.3.

A portion of emulsion (1) was adjusted to pH 6.0 with 28% aqueous NH$_3$ to give emulsion (2). Emulsions (3) to (6) were prepared in the same manner as emulsion (2) except that the proportions of the monomers MMA and EtA were varied as given in Table 1. For each emulsion, no aggregate was noted.

Physical property data obtained for the 6 emulsions are combinedly shown in Table 1.

# EP 0 190 353 B1

TABLE 1

| | | Monomer (parts) | | Particle size | Tg | Viscosity* |
| | No. | MMA | EtA | 0,001 µm | (°C) | Pa.s $10^{-3}$ |
|---|---|---|---|---|---|---|
| | 1 | 288 | 432 | 180 | 20 | 7 |
| | 2 | 288 | 432 | 180 | 20 | 7.5 |
| | 3 | 568 | 152 | 190 | 69 | 7.5 |
| | 4 | 408 | 312 | 185 | 40 | 7.5 |
| | 5 | 112 | 608 | 175 | −5 | 7.5 |
| | 6 | 24 | 696 | 170 | −15 | 7.5 |

*Viscosity (Pa.s $10^{-3}$): As measured under conditions of 30°C and 60 rpm using a Seiki Kogyo Kenkyusho model B viscometer.

Eight emulsions, namely the above 6 emulsions (1) to (6) plus DENKATEX AC-20 [Emulsion (7) for comparison; Denki Kagaku Kogyo's vinyl chloride-vinyl acetate type emulsion] and an emulsion [emulsion (8) for comparison] prepared by adding 5% of sodium ligninsulfonate to emulsion (7), were each mixed with POROMIC A-100 and water such that the ratio polymer/gypsum amounted to 5/100 and the ratio water/gypsum to 38/100. Each mixture was poured into a polyethylene mold. After allowing to stand at room temperature for hardening, the mold was removed and the molding was tested for several performance characteristics. The results thus obtained are shown in Table 2.

TABLE 2

| | Emulsion | | | | Surface hardness* | | Dry compression strength (kg/cm²)** | Weight loss upon washing (%) |
| | No. | Percent viscosity reduction (%) | Hardening time (min.) | Percent setting expansion (%) | After 2 hours | After 24 hours | | |
|---|---|---|---|---|---|---|---|---|
| This invention | 2 | 48 | 32 | 0.17 | >6 H | >6 H | 540 | 10 |
| | 4 | 47 | 33 | 0.17 | >6 H | >6 H | 550 | 9 |
| | 5 | 47 | 32 | 0.17 | >6 H | >6 H | 490 | 10 |
| Comparative Example | 1 | 48 | 25 | 0.26 | >6 H | >6 H | 540 | 10 |
| | 3 | 48 | 33 | 0.17 | <HB | H | 360 | 49 |
| | 6 | 46 | 32 | 0.17 | 3 H | >6 H | 380 | 10 |
| | 7 | 15 | 52 | 0.31 | 2 H | >6 H | 270 | 17 |
| | 8 | 61 | 55 | 0.33 | 2 H | >6 H | 250 | 25 |
| | Blank | | 32 | 0.17 | <HB | H | 360 | 51 |

*Surface hardness: Pencil hardness as measured using Mitsubishi's UNI pencils.
**($\triangleq$98 kPa)

It is understood that, as is clear from the results shown in Table 2, the gypsum moldings with the emulsions according to the invention [emulsions (2), (4) and (5)] added become hardened in almost the same time as the blank, with the percent setting expansion almost unchanged, and have their surface hardness markedly improved in a short period after hardening and further have their strength and water

7

resistance significantly improved. The emulsions according to the invention were very stable without showing aggregation at the time of blending; they scarcely foamed. The mixtures of said emulsions with gypsum each had a very low viscosity and could be molded easily. On the other hand, the emulsions without the scope of the invention [emulsions (1), (3) and (6)] were either insufficient with respect to hardening time, percent setting expansion, surface hardness, dry compression strength or water resistance or unable to produce marked improvements with these respects as compared with the blank. As for the commercially available emulsions [(7) and (8)], the hardening time and percent setting expansion data showed fluctuations, the strength data were inferior to those for the blank, foaming and aggregation of the emulsions were observed at the time of blending, and molding was difficult to perform, although certain improvements were noted with respect to surface hardness and water resistance.

Example 2

The same polymerization vessel as used in Example 1 was charged with 904 parts of deionized water and 0.014 part of ferrous chloride and the polymerization vessel inside temperature was maintained at 35°C. Then, under the same stirring conditions as used in Example 1, a solution of 3.6 parts of sodium hydrogen sulfite in 16.4 parts of deionized water was added to the polymerization vessel, followed by dropwise addition of a solution of 24 parts of NASS in 176 parts of deionized water, a monomer mixture specified in Table 3 and a solution of 4 parts of APS in 96 parts of deionized water in the same manner as Example 1 except that the dropping time was 1 hour. After 1 further hour of polymerization as in Example 1, the reaction mixture was adjusted to pH 8.0 with 20% aqueous potassium hydroxide. In this manner, 3 emulsions [(9) to (11)] were produced. For any of these emulsions, there was observed no aggregate at all. The viscosity was 7 Pa.s $10^{-3}$. Several characteristics of emulsions (9) to (11) are also shown in Table 3.

TABLE 3

| | Monomer (parts) | | | | | Particle size (0,001 µm) | Tg (°C) |
|---|---|---|---|---|---|---|---|
| No. | MMA | ST | EtA | VdC*(Note) | MAA | | |
| 9 | 304 | 40 | 432 | 0 | 0 | 120 | 20 |
| 10 | 288 | 40 | 432 | 0 | 16 | 80 | 20 |
| 11 | 264 | 40 | 256 | 200 | 16 | 85 | 20 |

(Note) VdC: Vinylidene chloride

The above emulsions (9) to (11) were tested for performance characteristics in the same manner as Example 1 except that the gypsum used was San-esu Sekko's special grade gypsum for casing manufacture (red mark) and the water/gypsum ratio was 65/100. The results obtained are shown in Table 4. The hardening time and percent setting expansion data were almost equal to those for the blank.

TABLE 4

| Emulsion | | Dry compression strength (kg/cm²)* | Weight loss upon washing (%) |
|---|---|---|---|
| No. | Percent viscosity (%) | | |
| 9 | 55 | 170 | 15 |
| 10 | 63 | 230 | 16 |
| 11 | 65 | 320 | 9 |
| Blank | | 85 | 72 |

*(≙98 kPa)

It is to be understood that as is clear from comparison for the data obtained in Example 1 with those shown in Table 4, the use of a redox catalyst, and also the use of an ethylenically unsaturated carboxylic acid as one of the monomer components, can lead to emulsion particle size reduction and also to greater viscosity reduction.

It is also understood that VdC-containing emulsions can improve moldings markedly with respect to strength and water resistance.

Example 3

Three emulsions [(12) to (14)] were produced in the same manner as emulsion (11) of Example 2 except that the stirring conditions were varied as specified in Table 5. Furthermore, another emulsion (15) was produced in the same manner as emulsion (12) except that NASS was replaced with the same amount of a low molecular weight emulsifier (Daiichi Kogyo's HITENOL No. 8).

Several performance characteristics of emulsions (12) to (15) are also shown in Table 5.

TABLE 5

| No. | Impeller tip speed (cm/sec) | Particle size (0,001 μm) | Viscosity Pa.s $10^{-3}$ | Aggregate* (%) |
|---|---|---|---|---|
| 12 | 70 | 210 | 7 | 5.3 |
| 13 | 120 | 130 | 7 | 0.2 |
| 14 | 370 | 80 | 7 | 0 |
| 15 | 70 | 85 | 35 | 0.1 |

(Note) Aggregate (%): Based on the total solids in the emulsion.

It is understood, as is evident from the above table, that the stirring conditions are very important in producing emulsions having good characteristics without using any low molecular weight emulsifier.

Example 4

Emulsions [(16) to (21)] with a solid content of about 20% were produced according to the same formulation as used in Example 2 except that the monomers and proportions thereof were varied as given in Table 6.

Several characteristics of the 6 emulsions obtained are also shown in Table 6.

TABLE 6

| No. | Monomer (parts) | | | | | | Particle size 0,001 μm | Vis-cosity Pa.s $10^{-3}$ | Aggrega-tion |
|---|---|---|---|---|---|---|---|---|---|
| | MMA | BuA[1] | MAA | VAc[2] | NASS | AMPS[3] | | | |
| 16 | 211.6 | 176 | 12 | 0 | 0.4 | 0 | 250 | 210 | Yes |
| 17 | 212 | 176 | 8 | 0 | 4.4 | 0 | 150 | 15 | No |
| 18 | 192 | 176 | 4 | 0 | 2.8 | 0 | 55 | 7 | No |
| 19 | 160 | 176 | 4 | 0 | 60 | 0 | — | — | — |
| 20 | 216 | 164 | 8 | 0 | 0 | 12 | 160 | 7 | No |
| 21 | 153 | 135 | 20 | 80 | 12 | 0 | 85 | 125 | No |

Note:
[1] BuA: Butyl acrylate
[2] VAc: Vinyl acetate
[3] AMPS: Sodium 2-acrylamido-2-methylpropanesulfonate.

Five emulsions other than emulsion (19) were evaluated for performance characteristics in the same manner as Example 2. The results obtained are shown in Table 7. Emulsion (19) occurred as something like a homogeneous and viscous solution, hence was unpreferable.

# EP 0 190 353 B1

## TABLE 7

| | Emulsion | | | | |
|---|---|---|---|---|---|
| No. | Percent viscosity reduction (%) | Hardening time (min.) | Percent setting expansion (%) | Dry compression strength (kg/cm²) | Weight loss upon washing (%) |
| 16 | 13 | 50 | 0.30 | 80 | 25 |
| 17 | 38 | 38 | 0.21 | 150 | 17 |
| 18 | 70 | 35 | 0.20 | 240 | 20 |
| 20 | 52 | 34 | 0.20 | 220 | 15 |
| 21 | 8 | 40 | 0.26 | 90 | 30 |
| Blank | | 35 | 0.20 | 85 | 72 |

It is understood, as is clear from the above table that the emulsions which come under the preferred embodiments of the invention [emulsions (17), (18) and (20)] produce particularly remarkable improving effects.

Example 5

Emulsions (22) and (23) were produced by adjusting emulsions (10) and (11), respectively, of Example 2 to pH 12 with 20% aqueous potassium hydroxide.

Moldings were prepared and evaluated for performance characteristics in the same manner as Example 2 except that the gypsum used was Mutsumi Kagaku Kogyo's alkaline gypsum HISTONE B for superprecision molding manufacture and the water/gypsum ratio was 42/100. The results obtained are shown in Table 8.

## TABLE 8

| | Emulsion | | | | |
|---|---|---|---|---|---|
| No. | Percent viscosity reduction (%) | Hardening time (min.) | Percent setting expansion (%) | Dry compression strength (kg/cm²) | Weight loss upon washing (%) |
| 22 | 64 | 46 | 0.021 | 350 | 13 |
| 23 | 65 | 48 | 0.022 | 430 | 8 |
| Blank | | 45 | 0.020 | 170 | 65 |

From the above results, it is clearly understood that the emulsions according to the invention have excellent performance characteristics.

Example 6

Emulsion (2) according to the invention prepared in Example 1, emulsion (7) for comparison (of Example 1) and emulsion (21) for comparison (of Example 4) were each applied to the surface of gypsum moldings made of San-esu Sekko's type α gypsum GYPSTONE at a dose of 100 g/m², followed by drying at 105°C for 20—60 minutes and testing for performance characteristics. The results obtained are shown in Table 9.

EP 0 190 353 B1

TABLE 9

| | Emulsion | | | Surface hardness | | Water resistance test[1] after 120 min. drying |
| | No. | Dilution (times) | Penetra-tion[2] | After 20 min. | After 60 min. | |
|---|---|---|---|---|---|---|
| This invention | 2 | 1 | ◎ | 3H | >6H | 3H |
| | 2 | 4 | ◎ | H | >6H | H |
| Comparative Example | 7 | 1 | X | <HB | <HB | <HB |
| | 7 | 4 | △ | <HB | H | <HB |
| | 21 | 2 | △ | <HB | H | <HB |
| | Blank | | / | <HB | HB | <HB |

(Note)
[1] Water resistance test after 120 minutes of drying: Surface hardness after 30 minutes of exposure to flowing water 30 cm below a city water tap (rate of water flow: 700 ml/min.)
[2] ◎: Excellent, o: Good, △: Fair, X: Poor

As is evident from the results given in Table 9, the emulsions according to the invention as applied as sealers showed good penetrating ability and improved the surface hardness and water resistance of the moldings after a short period of drying, whereas the use of emulsions (7) and (21) resulted in unsatisfactory penetration and produced little improving effects on the surface hardness and water resistance.

Then, three groups of moldings obtained by 120 minutes of drying of the above sealer-coated moldings were coated with an aqueous emulsion type top coat paint or an organic solvent type top coat paint. After allowing to stand for 1 day, the moldings were subjected to peel test using CELLOTAPE (adhesive tape). The results of this peel resistance evaluation are shown in Table 10.

TABLE 10

| Emulsion | | Peel resistance | |
|---|---|---|---|
| No. | Dilution (times) | Water paint | Solvent paint |
| 2 | 4 | ◎ | ◎ |
| 7 | 4 | △~X | △~X |
| 21 | 2 | △~X | △~X |

It is understood, as is clear from the results in Table 10, that the moldings coated with the sealer according to the invention [emulsion (2)] show markedly improved peel resistance whether the top coat is of an aqueous paint or of a solvent paint.

Example 7
Emulsion (11) of the invention (Example 2) was diluted four-fold with water and the dilution was applied to the surface of ASAHI plate (Asahi Sekimen Kogyo's asbestos slate plate) at a dose of 100 g/m². The plate was dried at room temperature for 3 days and then tested for water absorption according to JIS A 5403. Further, the above emulsion-treated asbestos slate plate was coated with an aqueous acrylic paint, then dried at room temperature for 3 days, and subjected to CELLOTAPE peel test on one hand and, on the other, to immersion in water at 50°C for 1 week followed by observation for appearance and CELLOTAPE peel test. The results thus obtained are summarized in Table 11.

11

TABLE 11

| Emulsion No. | Water absorption (ratio to blank) | After drying cellotape peel test | After immersion in water | |
|---|---|---|---|---|
| | | | Appearance | Cellotape peel test |
| 11 | 0.06 | ◎ | ◎ | ◎ |
| Blank | 1.0 | o | Slight swelling | △ |

(Note) ◎: Excellent, o: Good, △: Fair

From the above results, it is understood clearly that the use of the emulsion according to the invention can lead to marked improvements in surface strength and water resistance.

Example 8

To 100 parts of emulsion (11) according to the invention described in Example 2, there were added 200 parts of common Portland cement (polymer/cement ratio=20/100), 400 parts of sand and 70 parts of water (total water/cement ratio=65/100). The mixture was kneaded, poured into a polyethylene mold and allowed to stand at room temperature for 1 day. The molding was taken out from the mold, cured in water for 20 days and further dry-cured in air for 7 days.

This cured molding and a cured molding for comparison produced in the same manner as above except that the emulsion was not used but 130 parts of water was added were tested for performance characteristics. The results thus obtained are shown in Table 12.

TABLE 12

| Emulsion No. | Dry compression strength (kg/cm$^2$)* | Dry bending strength (kg/cm$^2$)* | Penetration of water into mortar under water pressure of 1 kg/cm$^2$* (ratio to blank) |
|---|---|---|---|
| 11 | 550 | 78 | 0.2 |
| Blank | 380 | 57 | 1.0 |

*($\triangleq$98 kPa)

From the results in the above table, it is clearly understood that the use of the emulsion according to the invention can lead to remarkable improvements in strength and water resistance.

Industrial applicability

Such emulsion provided by the present invention can be used for admixing with inorganic molding materials such as gypsum and cement, for coating moldings made of such materials, or as a sealer for gypsum boards, mortars, asbestos cement and so forth. Especially when said emulsion is applied to gypsum-containing inorganic materials, particularly good results can be brought about.

**Claims**

1. An emulsion for modifying inorganic moldings which comprises a polymer dispersed in water in the form of particles substantially smaller in size than 1 μm, said polymer being composed of a (meth)acrylic acid ester, an ethylenically unsaturated sulfonic acid or a salt thereof and at least one other ethylenically unsaturated compound and having a glass transition temperature within the range of −10 to 60°C, capable of causing viscosity reduction, as defined in the description, of not less than 25%, and said emulsion having a pH of not less than 4.0 and being substantially free of any low molecular weight emulsifier.

2. The emulsion of Claim 1 which has a viscosity of not more than 0.1 Pa.s (100 cp).

3. The emulsion of Claim 1, wherein the content of said ethylenically unsaturated sulfonic acid or salt thereof in said polymer is 0.2 to 10 percent by weight.

4. The emulsion of Claim 1, wherein ethylenically unsaturated sulfonic acid or salt thereof is p-styrene-sulfonic acid or a salt thereof.

5. The use of an emulsion according to Claim 1, for modifying gypsum moldings.

6. The emulsion of Claim 1, wherein said other ethylenically unsaturated compound is a vinyl halide or a vinylidene halide.

7. The emulsion of Claim 6, wherein said vinylidene halide is vinylidene chloride.

8. The emulsion of Claim 1, wherein said other ethylenically unsaturated compound is an ethylenically unsaturated carboxylic acid or a salt thereof.

9. A method of producing an emulsion for modifying inorganic moldings which comprises subjecting a monomer mixture composed of a (meth)acrylic acid ester, an ethylenically unsaturated sulfonic acid or a salt thereof and at least one other ethylenically unsaturated compound to polymerization in the presence of water in an amount of 30 to 90 percent by weight based on the total of the monomer mixture and water under conditions that the stirring impeller tip speed amounts to less than 90 cm/second to thereby cause formation an aqueous dispersion of a polymer having a glass transition temperature within the range of $-10$ to 60°C and a particle size of substantially not more than 1 µm, followed, as necessary, by adjusting the pH to a value of not less than 4.0, said emulsion being substantially free of any low molecular weight emulsifier.

10. The method of Claim 9, wherein said ethylenically unsaturated sulfonic acid or salt thereof is used in an amount within the range of 0.2 to 10 percent by weight.

11. The method of Claim 9, wherein p-styrenesulfonic acid or a salt thereof is used as said ethylenically unsaturated sulfonic acid or salt thereof.

12. The use of the emulsion produced in the method of Claim 9, for modifying gypsum moldings.

13. The method of Claim 9, wherein the polymerization is carried out using a redox catalyst as the polymerization catalyst under conditions such that the chemical equivalent ratio of the reducing agent to the oxidizing agent is not more than 3.5.

14. The method of Claim 9, wherein a vinyl halide or a vinylidene halide is used as said other ethylenically unsaturated compound.

15. The method of Claim 14, wherein vinylidene chloride is used as said vinylidene halide.

16. The method of Claim 9, wherein the pH is adjusted using an alkali or alkaline earth metal hydroxide or ammonia.

17. The method of Claim 16, wherein sodium hydroxide, potassium hydroxide or calcium hydroxide is used as said alkali or alkaline earth metal hydroxide.

18. The method of Claim 9, wherein an ethylenically unsaturated carboxylic acid or a salt thereof is used as said other ethylenically unsaturated compound.

19. The method of Claim 13, wherein a persulfuric acid salt is used as the oxidizing agent.

20. The method of Claim 13, wherein a reducing sulfoxy compound is used as said reducing agent.

**Patentansprüche**

1. Emulsion zur Modifikation anorganischer Gießformen, die ein in Form von Teilchen hauptsächlicher einer Größe von weniger als 1 µm in Wasser verteiltes Polymer aufweist, das aus einem (Meth)acrylsäure-Ester, einer ethylenisch ungesättigten Sulfonsäure oder einem Salz davon und wenigstens einer anderen ethylenisch ungesättigten Verbindung zusammengesetzt ist und eine Glas-Umwandlungstemperatur in einem Bereich von $-10$ bis 60°C aufweist, die eine Reduzierung der Viskosität—wie in der Beschreibung angegeben—von nicht weniger als 25% bewirken kann, und welche Emulsion ein pH von nicht weniger als 4,0 aufweist und im wesentlichen frei von jeglichem Emulgator geringen Molekulargewichts ist.

2. Emulsion nach Anspruch 1, dadurch gekennzeichnet, daß sie eine Viskosität von nicht mehr als 0,1 Pa.s (100 cp) besitzt.

3. Emulsion nach Anspruch 1, dadurch gekennzeichnet, daß der Gehalt an ethylenisch ungestättigter Sulfonsäure oder deren Salz in dem Polymer 0,2 bis 10 Gewichtsprozent beträgt.

4. Emulsion nach Anspruch 1, dadurch gekennzeichnet, daß die ethylenisch ungesättigte Sulfonsäure oder deren Salz p-Styrolsulfonsäure oder deren Salz ist.

5. Verwendung einer Emulsion nach Anspruch 1 für die Modifikation von Gipsformen.

6. Emulsion nach Anspruch 1, dadurch gekennzeichnet, daß die andere ethylenisch ungesättigte Verbindung ein Vinylhalid oder Vinylidenhalid ist.

7. Emulsion nach Anspruch 6, dadurch gekennzeichnet, daß das Vinylidenhalid Vinylidenchlorid ist.

8. Emulsion nach Anspruch 1, dadurch gekennzeichnet, daß die andere ethylenisch ungesättigte Verbindung eine ethylenisch ungesättigte Karbonsäure oder ein Salz derselben ist.

9. Verfahren zur Herstellung einer Emulsion für die Modifikation anorganischer Gießformen, dadurch gekennzeichnet, daß eine aus einem (Meth)-acrylsäure-Ester gebildete monomere Mischung, eine ethylenisch ungesättigte Sulfonsäure oder ein Salz derselben und wenigstens eine andere ethylenisch ungesättigte Verbindung in Präsenz von Wasser in einer Menge von 30 bis 90 Gewichtsprozent basierend auf der Gesamtmenge der monomeren Mischung und des Wassers einer Polymerisation unterzogen wird, und zwar unter den Bedingungen, daß die Gewichwindigkeit der Rührschaufelspitze weniger als 90 cm/s beträgt, um dadurch die Bildung einer wässrigen Dispersion eines Polymers mit einer Glasumwandlungstemperatur innerhalb des Bereichs von $-10$ bis 60°C und einer Partikelgröße von hauptsächlich nicht mehr als 1 µm zu bewirken, je nach Notwendigkeit gefolgt von der Einstellung bzw. Regulierung des pH-Wertes auf einen Wert von nicht weniger als 4,0, wobei die Emulsion im wesentlichen frei von jeglichem Emulgator geringen Molekulargewichts ist.

10. Verfahren nach Anspruch 9, dadurch gekennzeichnet, daß die ethylenisch ungesättigte Sulfonsäure oder Salz derselben verwendet wird in einer Menge innerhalb des Bereichs von 0,2 bis 10 Gewichtsprozent.

11. Verfahren nach Anspruch 9, dadurch gekennzeichnet, daß p-Styrolsulfonsäure oder ein Salz derselben als die genannte ethylenisch ungesättigte Sulfonsäure oder Salz derselben verwendet wird.

12. Verwendung der in dem Verfahren nach Anspruch 9 hergestellten Emulsion zur Modifikation von Gipsformen.

13. Verfahren nach Anspruch 9, dadurch gekennzeichnet, daß die Polymerisation unter Verwendung eines Redox-Katalysators als Polymerisationskatalysator unter solchen Bedingungen durchgeführt wird, daß das chemische äquivalente Verhältnis des Reduktionsmittels gegenüber dem Oxidationsmittel nicht mehr als 3,5 beträgt.

14. Verfahren nach Anspruch 9, dadurch gekennzeichnet, daß ein Vinylhalid oder ein Vinylidenhalid als diese andere ethylenisch ungesättigte Verbindung verwendet wird.

15. Verfahren nach Anspruch 14, dadurch gekennzeichnet, daß Vinylidenchlorid als dieses Vinylidenhalid verwendet wird.

16. Verfahren nach Anspruch 9, dadurch gekennzeichnet, daß die Einstellung des pH-Werts erfolgt, indem Alkali oder ein alkalisches Erdmetallhydroxid oder Ammoniak verwendet wird.

17. Verfahren nach Anspruch 16, dadurch gekennzeichnet, daß Natriumhydroxid, Kaliumhydroxid oder Kalziumhydroxid als dieses Alkali oder alkalische Erdmetallhydroxid verwendet wird.

18. Verfahren nach Anspruch 9, dadurch gekennzeichnet, daß eine ethylenisch ungesättigte Karbonsäure oder ein Salz derselben als diese andere ethylenisch ungesättigte Verbindung verwendet wird.

19. Verfahren nach Anspruch 13, dadurch gekennzeichnet, daß ein Schwefelsäuresalz als Oxidationsmittel verwendet wird.

20. Verfahren nach Anspruch 13, dadurch gekennzeichnet, daß eine reduzierende Sulfoxylverbindung als dieses Reduktionsmittel verwendet wird.

## Revendications

1. Emulsion pour modifier des moulages inorganiques, caractérisée en ce qu'elle comprend un polymère dispersé dans de l'eau sous la forme de particules de taille nettement inférieure à 1 micromètre, ce polymère étant constitué d'un ester d'acide (méth)-acrylique, d'un acide sulfonique éthylénique non saturé ou d'un sel de celui-ci, et d'au moins un autre composé éthyléniquement non saturé, et présentant une température de transition de verre se situant dans la plage de −10 à 60°C, capable de produire une réduction de viscosité, comme défini dans la description, ne descendant pas au-dessous de 25%, et cette émulsion présentant un pH ne descendant pas au-dessous de 4,0 et ne contenant absolument aucun émulsifiant de faible poids moléculaire.

2. Emulsion selon la revendication 1, caractérisée en ce qu'elle présente une viscosité ne dépassant pas 0,1 Pa.s (100 cp).

3. Emulsion selon la revendication 1, caractérisée en ce que la teneur du polymère est cet acide sulfonique éthyléniquement non saturé ou en ce sel de celui-ci, est de 0,2 à 10% en poids.

4. Emulsion selon la revendication 1, caractérisée en ce que l'acide sulfonique éthylèniquement non saturé ou le sel de celui-ci est un acide p-styrène-sulfonique ou un sel de celui-ci.

5. Procédé d'utilisation d'une émulsion selon la revendication 1, pour modifier des moulages en gypse.

6. Emulsion selon la revendication 1, caractérisée en ce que l'autre composé éthyléniquement non saturé est un halogénure de vinyle ou un halogénure de vinylidène.

7. Emulsion selon la revendication 6, caractérisée en ce que l'halogénure de vinylidène est du chlorure de vinylidène.

8. Emulsion selon la revendication 1, caractérisée en ce que l'autre composé éthyléniquement non saturé est un acide carboxylique éthyléniquement non saturé ou un sel de celui-ci.

9. Procédé de production d'une émulsion pour modifier des moulages inorganiques, procédé caractérisé en ce qu'il consiste à soumettre un mélange monomère constitué d'un ester d'acide (méth)-acrylique, d'un acide sulfonique éthyléniquement non saturé ou d'un sel de celui-ci, et d'au moins un autre composé éthyléniquement non saturé, à une polymérisation en présence d'eau en proportion de 30 à 90% en poids sur la base du total du mélange monomère et de l'eau, dans des conditions telles que la vitesse du bout de la palette d'agitation ne dépasse pas 90 cm/seconde pour produire ainsi la formation d'une dispersion aqueuse d'un polymère présentant une température de transition de verre située dans la plage de −10 à 60°C, et une taille de particules ne dépassant pratiquement pas 1 micromètre, puis à régler ensuite, si cela est nécessaire, le pH à une valeur ne descendant pas au-dessous de 4,0, cette émulsion ne contenant absolument aucun émulsifiant à faible poids moléculaire.

10. Procédé selon la revendication 9, caractérisé en ce que l'acide sulfonique éthyléniquement non saturé ou le sel de celui-ci, sont utilisés dans une proportion se situant dans la plage de 0,2 à 10% en poids.

11. Procédé selon la revendication 9, caractérisé en ce que de l'acide p-styrène-sulfonique ou un sel de celui-ci sont utilisés comme acide sulfonique éthyléniquement non saturé ou comme sel de celui-ci.

12. Utilisation de l'émulsion produite par le procédé selon la revendication 9 pour modifier des moulages en gypse.

13. Procédé selon la revendication 9, caractérisé en ce que la polymérisation est effectuée en utilisant un catalyseur redox comme catalyseur de polymérisation, dans des conditions telles que le rapport d'équivalent chimique de l'agent de réduction à l'agent d'oxydation ne soit pas supérieur à 3,5.

14. Procédé selon la revendication 9, caractérisé en ce qu'un halogénure de vinyle ou un halogénure de vinylidène sout utilisés comme autre composé éthyléniquement non saturé.

15. Procédé selon la revendication 14, caractérisé en ce que du chlorure de vinylidène est utilisé comme halogénure de vinylidène.

16. Procédé selon la revendication 9, caractérisé en ce que le pH est réglé en utilisant un alcali ou un hydroxyde métallique de terre alcaline, ou de l'ammoniaque.

17. Procédé selon la revendication 16, caractérisé en ce que l'hydroxyde de sodium, de l'hydroxyde de potassium ou de l'hydroxyde de calcium sont utilisés comme alcali ou comme hydroxyde métallique de terre alcaline.

18. Procédé selon la revendication 9, caractérisé en ce qu'un acide carboxylique éthyléniquement non saturé ou un sel de celui-ci sont utilisés comme autre composé éthyléniquement non saturé.

19. Procédé selon la revendication 13, caractérisé en ce qu'on utilise un sel d'acide persulfurique comme agent d'oxydation.

20. Procédé selon la revendication 13, caractérisé en ce qu'un composé sulfoxy-réducteur est utilisé comme agent de réduction.